(19) Europäisches Patentamt
European Patent Office
Office européen des brevets

(11) **EP 3 950 848 B1**

(12) **EUROPEAN PATENT SPECIFICATION**

(45) Date of publication and mention
of the grant of the patent:
**30.04.2025 Bulletin 2025/18**

(21) Application number: **20783166.0**

(22) Date of filing: **27.03.2020**

(51) International Patent Classification (IPC):
**C08L 101/08** (2006.01)   **B32B 27/30** (2006.01)
**B65D 65/40** (2006.01)   **C08K 3/10** (2018.01)
**C08K 5/05** (2006.01)   **C08L 33/02** (2006.01)

(52) Cooperative Patent Classification (CPC):
(C-Sets available)
**C09D 5/00; C08L 101/08; C09D 7/20; C09D 7/61;
C09D 7/67; C09D 7/68; C09D 133/02;
C09D 201/08;** C08K 3/10; C08K 2003/2296;
C08K 2201/003                                  (Cont.)

(86) International application number:
**PCT/JP2020/014010**

(87) International publication number:
**WO 2020/203766 (08.10.2020 Gazette 2020/41)**

(54) **GAS BARRIER COMPOSITION, COATING AGENT, AND LAMINATE**

GASSPERRZUSAMMENSETZUNG, BESCHICHTUNGSMITTEL UND LAMINAT

COMPOSITION BARRIÈRE CONTRE LESGAZ, AGENT DE REVÊTEMENT ET STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2019 JP 2019069852**

(43) Date of publication of application:
**09.02.2022 Bulletin 2022/06**

(73) Proprietor: **DIC Corporation
Tokyo 174-8520 (JP)**

(72) Inventors:
• **OKUBO Tomoo
Sakura-shi, Chiba 285-8668 (JP)**
• **HARADA Tomoaki
Sakura-shi, Chiba 285-8668 (JP)**
• **USAMI Yusho
Sakura-shi, Chiba 285-8668 (JP)**

(74) Representative: **Kraus & Lederer PartGmbB
Thomas-Wimmer-Ring 15
80539 München (DE)**

(56) References cited:
WO-A1-2009/041500   WO-A1-2013/146323
JP-A- 2003 292 713   JP-A- 2004 018 806
JP-A- 2004 238 604   JP-A- 2005 126 528
JP-A- 2013 241 587   JP-A- 2016 011 392
JP-A- 2016 159 916   JP-A- 2018 058 280

**(Cont. next page)**

(52) Cooperative Patent Classification (CPC): (Cont.)

C-Sets
**C08L 101/08, C08K 3/10, C08K 5/05;**
**C09D 133/02, C08K 5/05**

## Description

Technical Field

The present invention is one that provides a composition having gas barrier properties. A coating agent containing this gas barrier composition and a laminate obtained by applying this coating agent are also provided.

Background Art

Packaging materials for the packaging of foods, pharmaceutical products, or similar articles are expected to prevent the spoiling of the contents, oxidization caused by oxygen in particular. To cope with this demand, the industry has used a barrier film made of resin, which is acknowledged to have relatively high oxygen barrier properties, or a laminate made using such a barrier film as a film substrate (multilayer film).

The oxygen barrier resin has been one that contains a hydrogen-bonding group, which is highly hydrophilic, in its molecule, typified by polyacrylic acid or polyvinyl alcohol. Packaging materials made of such resins deliver excellent oxygen barrier properties under dry conditions. In conditions of high humidity, however, they have the disadvantage that the hydrophilicity of the resins causes a great decrease in their oxygen barrier properties.

To overcome such disadvantages, a known method for preparing a gas barrier packaging material includes stacking a layer of a polycarboxylic acid-based polymer and a layer containing a polyvalent metal compound on top of each other on a substrate and allowing the two layers to react to form a polyvalent metal salt of polycarboxylic acid. The production of such a gas barrier packaging material, however, is cumbersome; it requires multiple coating solutions and multiple rounds of coating.

PTL 1 discloses a gas barrier layer formed from a gas barrier layer-forming coating material containing a polyalcohol-based polymer (A) and a polycarboxylic acid-based polymer (B); and a resin layer formed from a resin coating material containing either a monovalent metal compound, or a monovalent metal compound and a bivalent or higher metal compound.

PTL 2 and PTL 3 disclose gas barrier laminates wherein the oxygen barrier layer is formed from a composition containing a carboxyl group-containing polymer, a polyvalent metal compound particle, a surfactant, and an organic solvent, and the water content is 1,000 ppm or less.

Citation List

Patent Literature

PTL 1: Japanese Unexamined Patent Application Publication No. 2007-112114
PTL 2: Japanese Unexamined Patent Application Publication No 2005-126528
PTL 3: Japanese Unexamined Patent Application Publication No 2016-159916

Summary of Invention

Technical Problem

The present invention addresses the problem of providing a composition that delivers high barrier properties in fewer coating steps.

Solution to Problem

After extensive research, the inventors found that a particular composition for gas barrier purposes that contains a carboxyl-containing resin, a divalent metal compound, and an alcohol can solve this problem.

That is, the present invention is one that provides a composition for gas barrier purposes consisting of a carboxyl-containing resin (A), a divalent metal compound (B), and an alcohol (C), wherein alcohol (C) content of the composition is between 85 and 98 wt%, and water content of the composition is 1 wt% or less the carboxyl-containing resin (A) is a homopolymer of a monomer selected from acrylic acid, methacrylic acid, maleic acid, and itaconic acid; and the divalent metal compound (B) is selected from zinc oxide, magnesium oxide and calcium oxide.

The present invention, furthermore, is one that provides a gas barrier coating agent containing this composition for gas barrier purposes and a laminate having a substrate and a coat layer obtained by applying this coating agent.

In addition, the present invention is one that provides a packaging material having this laminate and the use of this packaging material in heat sterilization.

Advantageous Effects of Invention

The composition according to the present invention is superior in storage stability because divalent metal compound(s) is kept stable therein. The composition, furthermore, is suitable for use as a coating agent for gas barrier purposes. The applied coating film exhibits high barrier properties in a one-component system, which means the composition delivers high barrier properties in fewer coating steps.

The laminate obtained by applying this composition to a substrate is suitable for use as a packaging material by virtue of its superior gas barrier properties. In particular, the laminate is suitable for use as a packaging material for which barrier properties are essential, such as one for foods, daily necessities, or electronic materials or for medical purposes.

The laminate, furthermore, is highly resistant to heat and wet heat, making it also suitable for use as a packaging material in heat sterilization, such as boiling or retorting.

Description of Embodiments

The present invention provides a composition for gas barrier purposes consisting of a carboxyl-containing resin (A), a divalent metal compound (B), and an alcohol (C). The alcohol (C) content of the composition is between 85 and 98 wt%, and the water content of the composition is wt% or less.

<Carboxyl-Containing Resin (A)>

According to the present invention, the carboxyl-containing resin (A) is a homopolymer of a monomer selected from acrylic acid, methacrylic acid, maleic acid, and itaconic acid.

Preferably, the carboxyl-containing resin (A) is one whose acid value is between 50 to 800 mg KOH/g because this leads to improved barrier performance. It is particularly preferred that the acid value be between 80 and 800 mg KOH/g. When the acid value of the resin (A) is 80 mg KOH/g or more, ionic bonding will proceed to a sufficient extent that the composition will achieve high barrier performance.

(Acid Value Measurement)

Acid value is the amount of potassium hydroxide in mg required to neutralize acid present in 1 g of the sample. Specifically, the acid value can be measured by the method of dissolving a weighed sample in any solvent in which the sample dissolves, e.g., the solvent of toluene/methanol = 70/30 by volume, adding some drops of a 1% alcoholic solution of phenolphthalein, and then adding a 0.1 mol/L alcoholic solution of potassium hydroxide dropwise and observing the point where the color changes. The acid value can be determined by the following equation for calculation.

Acid Value Measurement-1

$$\text{Acid value (mg KOH/g)} = (V \times F \times 5.61) / S$$

V: Consumption of the 0.1 mol/L alcoholic solution of potassium hydroxide (mL)
F: The factor of the 0.1 mol/L alcoholic solution of potassium hydroxide
S: Amount of sample collected (g)
5.61: Equivalent of potassium hydroxide in 1 mL of the 0.1 mol/L alcoholic solution of potassium hydroxide (mg)

If the sample is a solution of the resin, the acid value of the resin (mg KOH/g) can be determined by the following equation for calculation.

Acid value of the resin (mg KOH/g) = Acid value of the solution of the resin (mg KOH/g) / NV (%) $\times$ 100

NV: Nonvolatile content (%)

If the sample does not dissolve well in an organic solvent but separates to make the measurement difficult, the acid value can be measured by the following method instead.

Acid Value Measurement-2

Acid value (mg KOH/g-resin) is a value calculated by the following equation using an FT-IR (JASCO, FT-IR 4200) and a factor (f) obtained from a calibration curve constructed with a solution of maleic anhydride in chloroform and the absorbance (I) of the peak for the expansion of the anhydrous ring of maleic anhydride (1780 cm-1) and that (II) of the peak for the expansion of the carbonyl groups of maleic acid (1720 cm-1) in a solution of a maleic anhydride-modified polyolefin.

Acid value (mg KOH/g-regin) = [(Absorbance (I) $\times$ (f) $\times$ 2 $\times$ Molecular weight of potassium hydroxide $\times$ 1000 (mg) + Absorbance (II) $\times$ (f) $\times$ Molecular weight of potassium hydroxide $\times$ 1000 (mg)) / Molecular weight of maleic anhydride]

Molecular weight of maleic anhydride, 98.06; molecular weight of potassium hydroxide, 56.11

The molecular weight of a carboxyl-containing resin (A) according to the present invention is not critical. Preferably, the number-average molecular weight is between 300 and 1,200,000; this ensures the composition will form a coating well. It is particularly preferred that the number-average molecular weight be between 500 and 1,000,000.

The weight-average molecular weight of a carboxyl-containing resin (A) according to the present invention can be calculated by measuring it by the method of gel permeation chromatograph (GPC).

(Carboxyl-Containing Vinyl Resins)

Examples of carboxyl-containing vinyl resins include polymers of polymerizable unsaturated monomers having carboxyl group(s). Examples of polymerizable unsaturated monomers having carboxyl group(s) include unsaturated carboxylic acids, such as (meth)acrylic acid, 2-carboxyethyl (meth)acrylate, crotonic acid, itaconic acid, maleic acid, and fumaric acid;

> monoesters (half-esters) of unsaturated dicarboxylic acids and saturated monohydric alcohols, such as monomethyl itaconate, mono-n-butyl itaconate, monomethyl maleate, mono-n-butyl maleate, monomethyl fumarate, and mono-n-butyl fumarate;
> monovinyl esters of saturated dicarboxylic acids, such as monovinyl adipate and monovinyl succinate;
> adducts of saturated polycarboxylic anhydrides, such as succinic anhydride, glutaric anhydride, and phthalic anhydride, and hydroxy-containing vinyl monomers; and monomers such as those obtained through addition reaction between lactones and carboxyl-containing monomers like the listed ones.

According to the present invention, the carboxyl-containing resin (A) is a homopolymer of a monomer selected from acrylic acid, methacrylic acid, maleic acid, and itaconic acid.

The carboxyl-containing resin (A) can be obtained by just polymerizing the monomer using a process that is known and commonly used. The resin (A) can be produced by addition polymerization in the presence of a catalyst (polymerization initiator) and known polymerization techniques can be used, such as bulk polymerization, solution polymerization, suspension polymerization, and emulsion polymerization.

<Divalent Metal Compound (B)>

A metal compound (B) according to the present invention is characterized in that it is a divalent metal compound.

A divalent metal compound (B) is a compound of a divalent metal.

According to the present invention, the divalent metal compound (B) is selected from zinc oxide, magnesium oxide, and calcium oxide. Zinc oxide and magnesium oxide are particularly preferred.

Preferably, the divalent metal compound (B) is in particulate form. More preferably, the divalent metal compound (B) is fine particles having an average diameter of 500 nm or less and 10 nm or more. It is particularly preferred that the divalent metal compound (B) be fine particles having an average diameter between 20 nm and 300 nm.

The average diameter of particles in this context is measured using a dynamic-light-scattering particle size distribution analyzer, such as LB-500 (HORIBA).

<Alcohol (C)>

An alcohol (C) according to the present invention can be an alcohol that is known and commonly used. Specific examples include methanol, ethanol, propanol, butanol, hexanol, and pentanol. Methanol, ethanol, propanol, butanol are preferred, and propanol is particularly preferred.

<Composition for Gas Barrier Purposes>

A composition according to the present invention for gas barrier purposes is characterized in that it consists of a carboxyl-containing resin (A), a divalent metal compound (B), and an alcohol (C), all as described above. Of these, the percentage of the alcohol (C) is between 85 and 98 wt%, and the water content of the composition is 1 wt% or less. When the alcohol (C) and water are in these ranges, the divalent metal compound (B) is stable in the composition. The divalent metal compound (B), therefore, forms ionic bonds with the carboxyl-containing resin (A) and produces gas barrier properties only after the composition is applied and dried. Stable when stored in its normal state, the composition is eminently suitable for use as a coating agent for gas barrier purposes. The coating agent forms a gas barrier coat layer in a one-component system.

For the gas barrier composition according to the present invention, the nonvolatile content is between 1 wt% and 15 wt% of the composition. The percentage of the carboxyl-containing resin (A) and divalent metal compound (B) combined to the total nonvolatile content is 100 wt%. When this percentage is in this range, the composition produces sufficient gas barrier properties.

As for the proportion of the carboxyl-containing resin (A) to the divalent metal compound (B), it is preferred that the divalent metal compound (B) constitute 15 to 60 wt% of the carboxyl-containing resin (A) and divalent metal compound (B) combined. When this percentage is in this range, the composition combines good gas barrier properties with spreadability. It is particularly preferred that this percentage be between 20 and 50 wt%.

<Laminate>

Applying a coating agent that contains a composition according to the present invention for gas barrier purposes to a substrate gives a laminate having gas barrier properties. Once the coating agent is applied to a substrate, its volatile components are eliminated, causing the carboxyl-containing resin (A) and the divalent metal compound (B) to form ionic bonds. The resulting crosslinked structure gives the coating barrier properties.

A coating agent according to the present invention is stable when stored, free of changes such as gelation. By virtue of the presence of alcohol(s) (C), ionic bonding between carboxyl-containing resin(s) (A) and divalent metal compound(s) (B) is blocked until the agent is applied.

In a two-layer gas barrier laminate like those that have existed, furthermore, the ionic bonding between acid groups and metal compound(s) is limited to the interface. Crosslinks, therefore, extend only in two dimensions, and the inventors presume this causes the coating to have only low gas barrier properties as a result. The coating agent according to the present invention, the inventors presume, delivers high barrier properties because it is of one-component type and, therefore, forms a coat layer inside which crosslinks extend three-dimensionally.

(Substrate)

The material for the substrate is not critical; the manufacturer can choose a suitable material according to the purpose of use. Examples include wood, metal, metal oxides, plastic, paper, silicone, and modified silicone, and a substrate obtained by joining different materials together may also be used. The shape of the substrate is not critical; the substrate can be in any shape selected according to the purpose, such as flat-plate, sheet-shaped, or a three-dimensional shape having curvature throughout or in part of it. The hardness, thickness, etc., of the substrate are not critical either.

If the laminate is used as a packaging material, the substrate is, for example, a piece of paper, plastic, metal, or metal oxide.

It is not critical how to apply the coating agent; known and commonly used coating techniques can be used. Examples include spraying, spin coating, dipping, roll coating, blade coating, doctor roll coating, doctor blading, curtain coating, slit coating, screen printing, inkjet coating, and dispensing.

The coat layer obtained by applying the coating agent will have denser ionic bonds therein when the applied coating agent is dried. It is therefore preferred that the application be followed by a drying step. The drying step may be drying at room temperature or may be forced drying, such as heating, vacuum drying, or blow drying.

The laminate may be a multilayer one having a top layer on its substrate and coat layer. The top layer may be placed before the coating agent is dried or may be placed after the coating agent is dried. The top layer can be of any kind and can be, for example, a layer of wood, metal, metal oxide, plastic, paper, silicone, or modified silicone. Alternatively, an uncured resin solution may be applied over the coat layer and cured or dried into a top layer.

(Gaseous Substances That Can Be Prevented from Penetrating)

Examples of gases a resin composition according to the present invention or a laminate including this resin composition can intercept include inert gases, such as carbon dioxide, nitrogen, and argon, alcoholic substances, such as methanol, ethanol, and propanol, and phenols, such as phenol and cresol, as well as oxygen. Fragrance substances that are low-molecular-weight compounds, such as soy sauce, Worcestershire sauce, miso, limonene, menthol, methyl salicylate, coffee, cocoa shampoo, and conditioner.

<Packaging Material and That for Use in Heat Sterilization>

Superior in gas barrier properties, the laminate according to the present invention is suitable for use as a packaging material for which gas barrier properties are a demand. In particular, foods, daily necessities, electronic materials, contents for medical purposes, etc., are suitable applications of the packaging material according to the present invention because in such applications have high barrier properties are required.

The laminate, furthermore, is highly resistant to heat and wet heat, making it also suitable for use as a packaging material in heat sterilization, such as boiling or retorting.

EXAMPLES

The following describes the present invention by examples. The present invention, however, is not limited to these examples. The units are by weight unless stated otherwise.

Definition: The molecular weight of the repeating unit of polyacrylic acid (hereinafter: sometimes abbreviated to PAA) is 72. Usually, one molecule of zinc oxide (molecular weight, 81.4) (hereinafter: sometimes abbreviated to ZnO) contributes to reaction with two molecules of the repeating unit of PAA (molecular weight, $72 \times 2$) to form a salt. The formula in which PAA and ZnO are mixed in the proportions of PAA weight:ZnO weight = 144/82.4 = 100/57 is referred to as adding one equivalent of ZnO.

<Examples>

(Preparation Example 1)

A PAA solution with a solids concentration: 2% was obtained by dissolving, in a flask, a PAA powder having a number-average molecular weight of 250,000 (AC-10LHPK, Toagosei): 20 g by stirring it in boiling isopropyl alcohol (hereinafter sometimes abbreviated to IPA), Kanto Chemical: 980 g.

(Preparation Examples 2 to 6)

A PAA solution with a solids concentration: 20% was obtained by dissolving, in a flask, a PAA powder having a number-average molecular weight of 9000 (AC-10P, Toagosei): 200 g by stirring it in boiling IPA: 800 g. This solution was diluted with IPA to give 9000-Da PAA solutions with solids concentrations of 2%, 5%, 10%, and 15%.

(Preparation Examples 7 to 11)

For a liquid dispersion of ZnO, a ZnO solution with a solids concentration: 20% was obtained by mixing ZnO having a diameter of primary particles of 20 nm (Sakai Chemical Industry Co., Ltd., FINEX-50): 200 g and IPA: 800 g together, dispersing the mixture in a bead mill (Kotobuki Co., Ltd.: Ultra Aspec Mill UAM-015) using 0.3-mm zirconia beads for 1 hour, and then isolating the beads by sieving. This solution was diluted with IPA to give liquid dispersions of ZnO in IPA with solids concentrations of 2%, 5%, 10%, and 15%. The diameter of particles of ZnO in these liquid dispersions was 88 nm.

[Table 1]

| Table 1 | Preparation Example 1 | Preparation Example 2 | Preparation Example 3 | Preparation Example 4 | Preparation Example 5 | Preparation Example 6 |
|---|---|---|---|---|---|---|
| | PAA solution 1 | PAA solution 2 | PAA solution 3 | PAA solution 4 | PAA solution 5 | PAA solution 6 |
| PAA molecular weight | 250,000 | 9000 | 9000 | 9000 | 9000 | 9000 |
| Solids concentration | 2% | 20% | 2% | 5% | 10% | 15% |

(continued)

| Table 1 | Preparation Example 1 | Preparation Example 2 | Preparation Example 3 | Preparation Example 4 | Preparation Example 5 | Preparation Example 6 |
|---|---|---|---|---|---|---|
| | PAA solution 1 | PAA solution 2 | PAA solution 3 | PAA solution 4 | PAA solution 5 | PAA solution 6 |
| Solvent | IPA | IPA | IPA | IPA | IPA | IPA |

[Table 2]

| Table 2 | Preparation Example 7 | Preparation Example 8 | Preparation Example 9 | Preparation Example 10 | Preparation Example 11 |
|---|---|---|---|---|---|
| | ZnO solution 1 | ZnO solution 2 | ZnO solution 3 | ZnO solution 4 | ZnO solution 5 |
| ZnO particle diameter | 88 nm | 88 nm | 88 nm | 88 nm | 88 nm |
| Solids concentration | 20% | 2% | 5% | 10% | 15% |
| Solvent | IPA | IPA | IPA | IPA | IPA |

(Example 1)

Coating agent 1 was obtained by mixing 100 g of the 2% PAA solution obtained in Preparation Example 1 and 57.0 g of the 2% ZnO solution obtained in Preparation Example 8 together. Coating agent 1 was subjected to an appearance test of the coating agent.

In addition to this, laminate 1 was prepared by applying the coating agent to a substrate. The resulting laminate was subjected to an appearance test of the coat layer and a gas barrier test of the laminate.

The results are presented in Table 3.

<Appearance Test of the Coating Agent>

The appearance test of the coating agent was performed visually. The grades were as follows.

4: No fine particles separate out
3: A small quantity of fine particles separate out
2: A medium quantity of fine particles separate out
1: The separation of fine particles is significant

<Test of the Appearance of the Coat Layer>

The appearance test of the coat layer was performed visually. The substrate was a piece of polyethylene terephthalate film (TOYOBO ESTER Film's E5100; thickness, 12 $\mu$m), and laminate 1 was prepared by applying coating agent 1 thereto by the application method described below. For the resulting coat layer, its appearance test was conducted visually. The grades were as follows.

4: Pale white, and no fine particles separate out
3: Pale white, and a small quantity of fine particles separate out
2: Pale white, and a medium quantity of fine particles separate out
1: Pale white, and the separation of fine particles is significant

- Application of the Coating Agent:

A barrier coat film was obtained by preparing Matsuo Sangyo Co., Ltd.: K303 bar No. 1, yellow/6 $\mu$m, K303 bar No. 2, red/12 $\mu$m, K303 bar No. 3, green/24 $\mu$m, and K303 bar No. 4, black/ 40 $\mu$m, applying the mixed solution to a piece of PET film (TOYOBO ESTER Film's: E5100: thickness: 12 $\mu$m), and drying the coating at 120°C: 1 minute. The bar was selected so that the weight of the barrier coat material on the dried sample would be about 1.0 g/m2. The weight of applied coating was calculated by making ten coating samples under each set of conditions, weighing a 10 cm $\times$ 10 cm cutout of each sample and averaging the measured weights, and subtracting the average weight of ten substrate sheets of the same area from the determined average. Based on the results, the right coating bar was chosen.

The grades were:

4, Pale white, and no fine particles separate out;
3, Pale white, and a small quantity of fine particles separate out;
2, Pale white, and a medium quantity of fine particles separate out; and
1, Pale white, and the separation of fine particles is significant.

<Gas Barrier Test: Oxygen Permeability>

Oxygen permeability was tested using the barrier coat film on PET (thickness: 12 μm) obtained in the previous section, including the substrate. The measurement of oxygen permeability was carried out in accordance with JIS-K7126 (equal-pressure method) using MOCON's OX-TRAN 1/50 oxygen transmission rate analyzer in 23°C temperature and 0% RH humidity and 23°C temperature and 90%RH humidity atmospheres. RH stands for relative humidity. The unit of oxygen permeability is cc/day·atm·m2.

(Examples 2 to 11 and Comparative Examples 1 to 3)

For Examples 2 to 11 and Comparative Examples 1 to 3, a coating agent and a laminate were tested as in Example 1 except that the formula was changed to that in Table 3. The results are presented in Tables 3 to 5.

[Table 3]

| Table 3-1 | Example 1 | Example 2 | Example 3 | Example 4 | Example 5 | Example 6 |
|---|---|---|---|---|---|---|
| PAA solution | Preparation Example 1 | Preparation Example 1 | Preparation Example 1 | Preparation Example 1 | Preparation Example 1 | Preparation Example 1 |
| Amount of PAA solution used (g) | 100 | 100 | 100 | 100 | 100 | 100 |
| Solids concentration of ZnO solution | Preparation Example 8 | Preparation Example 8 | Preparation Example 8 | Preparation Example 8 | Preparation Example 8 | Preparation Example 8 |
| Amount of ZnO solution used (g) | 57 | 34.2 | 45.6 | 68.4 | 79.8 | 57 |
| Number of equivalents of ZnO | 1 | 0.6 | 0.8 | 1.2 | 1.4 | 1 |
| Percentage of PAA on a solids basis (%) | 1.27 | 1.49 | 1.37 | 1.19 | 1.11 | 1.27 |
| Percentage of ZnO on a solids basis (%) | 0.73 | 0.51 | 0.63 | 0.81 | 0.89 | 0.72 |
| Percentage of IPA (%) | 98 | 98 | 98 | 98 | 98 | 97.5 |
| Percentage of water (%) | 0 | 0 | 0 | 0 | 0 | 0.5 |
| Total of the materials (%) | 100 | 100 | 100 | 100 | 100 | 100 |
| Appearance of the coating agent | 4 | 4 | 4 | 4 | 4 | 4 |

(continued)

| Table 3-1 | Example 1 | Example 2 | Example 3 | Example 4 | Example 5 | Example 6 |
|---|---|---|---|---|---|---|
| Appearance of the coat layer | 4 | 4 | 4 | 4 | 4 | 3 |
| Oxygen permeability 23°C, 0% RH | 1 | 1.2 | 1.1 | 1.3 | 0.9 | 1.5 |
| Oxygen permeability 23°C, 90%RH | 1.2 | 2 | 1.6 | 1 | 0.8 | 3.3 |

[Table 4]

| Table 3-2 | Example 7 | Example 8 | Example 9 | Example 10 | Example 11 |
|---|---|---|---|---|---|
| PAA solution | Preparation Example 1 | Preparation Example 3 | Preparation Example 4 | Preparation Example 5 | Preparation Example 6 |
| Amount of PAA solution used (g) | 100 | 100 | 100 | 100 | 100 |
| Solids concentration of ZnO solution | Preparation Example 8 | Preparation Example 8 | Preparation Example 9 | Preparation Example 10 | Preparation Example 11 |
| Amount of ZnO solution used (g) | 57 | 57 | 57 | 57 | 57 |
| Number of equivalents of ZnO | 1 | 1 | 1 | 1 | 1 |
| Percentage of PAA on a solids basis (%) | 1.26 | 1.27 | 3.18 | 6.37 | 9.55 |
| Percentage of ZnO on a solids basis (%) | 0.72 | 0.73 | 1.82 | 3.63 | 5.45 |
| Percentage of IPA (%) | 97 | 98 | 95 | 90 | 85 |
| Percentage of water (%) | 1 | 0 | 0 | 0 | 0 |
| Total of the materials (%) | 100 | 100 | 100 | 100 | 100 |
| Appearance of the coating agent | 3 | 4 | 4 | 4 | 4 |
| Appearance of the coat layer | 3 | 4 | 4 | 4 | 4 |
| Oxygen permeability 23°C, 0% RH | 1.5 | 1 | 1.1 | 1.5 | 3 |
| Oxygen permeability 23°C, 90% RH | 4.9 | 1.2 | 1.3 | 1.9 | 4.2 |

[Table 5]

| Table 3-3 | Comparative Example 1 | Comparative Example 2 | Comparative Example 3 |
|---|---|---|---|
| PAA solution | Preparation Example 1 | Preparation Example 3 | Preparation Example 2 |
| Amount of PAA solution used (g) | 100 | 100 | 100 |
| Solids concentration of ZnO solution | Preparation Example 8 | Preparation Example 8 | Preparation Example 7 |
| Amount of ZnO solution used (g) | 57 | 57 | 57 |
| Number of equivalents of ZnO | 1 | 1 | 1 |
| Percentage of PAA on a solids basis (%) | 1.25 | 1.25 | 12.74 |
| Percentage of ZnO on a solids basis (%) | 0.72 | 0.72 | 7.26 |
| Percentage of IPA (%) | 96.5 | 96.5 | 80 |
| Percentage of water (%) | 1.5 | 1.5 | 0 |
| Total of the materials (%) | 100 | 100 | 100 |
| Appearance of the coating agent | 1 | 1 | 1 |
| Appearance of the coat layer | 1 | 1 | 1 |
| Oxygen permeability 23°C, 0% RH | 17.2 | 25.3 | 18.9 |
| Oxygen permeability 23°C, 90% RH | 84.9 | 90.6 | 23.1 |

In Examples 1 to 5, the 25-kDa PAA and ZnO solutions were mixed to make the ZnO equivalence factor vary from 0.6 to 1.4. The mixed solution and the coating were in good appearance, and the oxygen permeability was also good. In Examples 6 and 7, water was added to a percentage of 0.5% or 1.0% of the mixed solution as a whole. The appearance of the mixed solution and the coating, although somewhat worse, was practically acceptable, and the oxygen permeability was also good. In Examples 8 to 11, solids content levels of 2% to 15% were studied using 9000-Da PAA and a constant ZnO equivalence factor of 1. The mixed solution and the coating were in good appearance, and the oxygen permeability was also good.

In Comparative Examples 1 and 2, water was added to a percentage of 1.5% of the entire system with each of the 25-kDa and 9000-Da PAA solutions and the ZnO solution. The appearance of the mixed solution and the coating and the oxygen permeability were degraded significantly. In Comparative Example 3, the 9000-Da PAA and ZnO solutions were studied at a solids concentration of 20%. The appearance of the mixed solution of the coating and the oxygen permeability were poor.

Overall, the results indicated that in the context of a composition for gas barrier purposes containing a carboxyl-containing resin, a divalent metal compound, and an alcohol, good appearance of the mixed solution and the coating is combined with good oxygen permeability when the alcohol content of the composition is between 85 and 98 wt% and when the water content of the composition is 1 wt% or less.

Industrial Applicability

The composition according to the present invention is superior in storage stability because divalent metal compound(s) is kept stable therein. The composition, furthermore, is suitable for use as a coating agent for gas barrier purposes. The applied coating film exhibits high barrier properties in a one-component system, which means the composition delivers high barrier properties in fewer coating steps.

The laminate obtained by applying this composition to a substrate is suitable for use as a packaging material by virtue of its superior gas barrier properties. In particular, the laminate is suitable for use as a packaging material for which barrier properties are essential, such as one for foods, daily necessities, or electronic materials or for medical purposes.

The laminate, furthermore, is highly resistant to heat and wet heat, making it also suitable for use as a packaging material in heat sterilization, such as boiling or retorting.

**Claims**

1. A composition for gas barrier purposes consisting of a carboxyl-containing resin (A), a divalent metal compound (B), and an alcohol (C), wherein:

    the alcohol (C) content of the composition is between 85 and 98 wt%;
    the water content of the composition is 1 wt% or less;
    the carboxyl-containing resin (A) is a homopolymer of a monomer selected from acrylic acid, methacrylic acid, maleic acid, and itaconic acid; and
    the divalent metal compound (B) is selected from zinc oxide, magnesium oxide and calcium oxide.

2. The composition according to Claim 1 for gas barrier purposes, wherein the carboxyl-containing resin (A) is a homopolymer of acrylic acid as a monomer, and the at least one alcohol (C) is propanol.

3. The composition according to Claim 1 or 2 for gas barrier purposes, wherein the water content in the composition is 0 wt%.

4. The composition according to any one of Claims 1 to 3 for gas barrier purposes, wherein the divalent metal compound (B) is fine particles having an average diameter of 500 nm or less, as determined according to the description.

5. The composition according to any of Claims 1 to 4 for gas barrier purposes, wherein the alcohol (C) is at least one selected from methanol, ethanol, propanol, and butanol.

6. A gas barrier coating agent comprising the composition according to any one of Claims 1 to 5.

7. A laminate comprising a substrate and a coat layer obtained by applying the coating agent according to Claim 6.

8. The laminate according to Claim 7, wherein in the coat layer, there is an ionic bond between the carboxyl-containing resin (A) and the divalent metal compound (B).

9. A packaging material comprising the laminate according to Claim 8.

10. The use of the packaging material according to Claim 9 in heat sterilization.

**Patentansprüche**

1. Zusammensetzung für Gassperrzwecke, bestehend aus einem carboxylhaltigen Harz (A), einer zweiwertigen Metallverbindung (B) und einem Alkohol (C), wobei:

    der Gehalt des Alkohols (C) der Zusammensetzung zwischen 85 und 98 Gew.-% liegt;
    der Wassergehalt der Zusammensetzung 1 Gew.-% oder weniger beträgt;
    das carboxylhaltige Harz (A) ein Homopolymer eines Monomers ist, das aus Acrylsäure, Methacrylsäure, Maleinsäure und Itaconsäure ausgewählt ist; und
    die zweiwertige Metallverbindung (B) ausgewählt ist aus Zinkoxid, Magnesiumoxid und Calciumoxid.

2. Zusammensetzung nach Anspruch 1 für Gasbarrierezwecke, wobei das carboxylhaltige Harz (A) ein Homopolymer von Acrylsäure als Monomer ist und der mindestens eine Alkohol (C) Propanol ist.

3. Zusammensetzung nach Anspruch 1 oder 2 für Gasbarrierezwecke, wobei der Wassergehalt in der Zusammensetzung 0 Gew.-% beträgt.

4. Zusammensetzung nach einem der Ansprüche 1 bis 3 für Gasbarrierezwecke, wobei es sich bei der zweiwertigen Metallverbindung (B) um feine Teilchen mit einem durchschnittlichen Durchmesser von 500 nm oder weniger handelt, wie gemäß der Beschreibung bestimmt.

5. Zusammensetzung nach einem der Ansprüche 1 bis 4 für Gassperrzwecke, wobei der Alkohol (C) mindestens einer ist, ausgewählt aus Methanol, Ethanol, Propanol und Butanol.

**6.** Gassperrendes Beschichtungsmittel, umfassend die Zusammensetzung nach einem der Ansprüche 1 bis 5.

**7.** Laminat, umfassend ein Substrat und eine durch Auftragen des Beschichtungsmittels nach Anspruch 6 erhaltene Deckschicht.

**8.** Laminat nach Anspruch 7, wobei in der Deckschicht eine ionische Bindung zwischen dem carboxylhaltigen Harz (A) und der zweiwertigen Metallverbindung (B) besteht.

**9.** Verpackungsmaterial, umfassend das Laminat nach Anspruch 8.

**10.** Verwendung des Verpackungsmaterials nach Anspruch 9 zur Hitzesterilisation.


**Revendications**

**1.** Composition destinée à servir de barrière aux gaz, constituée d'une résine contenant du carboxyle (A), d'un composé métallique divalent (B) et d'un alcool (C), dans laquelle :

la teneur en alcool (C) de la composition est comprise entre 85 et 98 % en poids ;
la teneur en eau de la composition est inférieure ou égale à 1 % en poids ;
la résine contenant du carboxyle (A) est un homopolymère d'un monomère choisi parmi l'acide acrylique, l'acide méthacrylique, l'acide maléique et l'acide itaconique ; et
le composé métallique divalent (B) est choisi parmi l'oxyde de zinc, l'oxyde de magnésium et l'oxyde de calcium.

**2.** Composition selon la revendication 1 destinée à servir de barrière aux gaz, dans laquelle la résine contenant du carboxyle (A) est un homopolymère de l'acide acrylique en tant que monomère, et l'au moins un alcool (C) est le propanol.

**3.** Composition selon la revendication 1 ou 2 destinée à servir de barrière aux gaz, dans laquelle la teneur en eau de la composition est de 0 % en poids.

**4.** Composition selon l'une des revendications 1 à 3 destinée à servir de barrière aux gaz, dans laquelle le composé métallique divalent (B) est constitué de fines particules dont le diamètre moyen est inférieur ou égal à 500 nm, tel que déterminé selon la description.

**5.** Composition selon l'une des revendications 1 à 4 destinée à servir de barrière aux gaz, dans laquelle l'alcool (C) est au moins l'un des alcools suivants : méthanol, éthanol, propanol et butanol.

**6.** Agent de revêtement à barrière de gaz comprenant la composition selon l'une des revendications 1 à 5.

**7.** Stratifié comprenant un substrat et une couche de revêtement obtenue par application de l'agent de revêtement selon la revendication 6.

**8.** Stratifié selon la revendication 7, dans lequel, dans la couche de revêtement, il existe une liaison ionique entre la résine contenant du carboxyle (A) et le composé métallique divalent (B).

**9.** Matériau d'emballage comprenant le stratifié selon la revendication 8.

**10.** Utilisation du matériau d'emballage selon la revendication 9 dans la stérilisation à chaud.

**EP 3 950 848 B1**

**REFERENCES CITED IN THE DESCRIPTION**

**Patent documents cited in the description**

- JP 2007112114 A
- JP 2005126528 A
- JP 2016159916 A